## Europäisches Patentamt

## European Patent Office

## Office européen des brevets

(11) Veröffentlichungsnummer: **0 151 682**
**A2**

# (12) EUROPÄISCHE PATENTANMELDUNG

(21) Anmeldenummer: **84109699.3**

(22) Anmeldetag: **22.05.80**

(51) Int. Cl.⁴: **G 02 B 27/10**

(30) Priorität: **06.06.79 DE 2922839**

(43) Veröffentlichungstag der Anmeldung:
**21.08.85 Patentblatt 85/34**

(84) Benannte Vertragsstaaten:
**AT BE CH FR GB IT LI LU NL SE**

(60) Veröffentlichungsnummer der früheren
Anmeldung nach Art. 76 EPÜ: **0 021 048**

(71) Anmelder: **Messmetallurgie GmbH**
**Friedrichstrasse 40**
**D-5802 Wetter (Ruhr)(DE)**

(72) Erfinder: **Chrestin, Dirk, Dr.**
**Ferdinand-Wallbrecht-Strasse 6-8**
**D-3000 Hannover 1(DE)**

(72) Erfinder: **Hock, Fromund, Prof. Dr.-Ing.**
**Bergstrasse 12**
**D-3003 Ronnenberg 3(DE)**

(72) Erfinder: **Ringer, Kurt**
**Böttcherei 206**
**D-2803 Weyhe(DE)**

(72) Erfinder: **Ulbers, Gerd**
**Lindenbaumstrasse 10**
**D-7730 VS-Weilersbach(DE)**

(74) Vertreter: **König, Norbert, Dipl.-Phys. Dr. et al,**
**Patentanwälte Leine & König Burckhardtstrasse 1**
**D-3000 Hannover 1(DE)**

(54) Optische Einrichtung zur Erzeugung zweier sich unter bestimmtem Winkel durchdringender koplanarer Strahlenbündel.

(57) Die Erzeugung zweier sich unter einem bestimmten Winkel durchdringender koplanarer Strahlenbündel wirft insofern Probleme auf, als die Justierung schwierig ist und der Durchdringungswinkel nicht stabil festlegbar ist.

Zur Lösung dieses Problems wird eine optische Einrichtung vorgeschlagen mit einem den einfallenden Strahl in zwei Teilstrahlen aufspaltenden Strahlenteiler, der für stabil bleibenden Winkel zwischen diesen Teilstrahlen sorgt, wobei zur Zusammenführung der beiden Teilstrahlen unter einem ebenfalls stabil bleibenden Winkel ein teleskopisch abbildendes System vorgesehen ist. Durch diese Ausbildung können der Geräteabstand vom optischen Bauelement bzw. Objekt und der Durchdringungswinkel unabhängig voneinander gewählt werden, wodurch die Anwendung der optischen Einrichtung wesentlich erleichtert wird. Der Strahldurchdringungswinkel ist leicht und stabil einstellbar. Variationen des Abstandes der Durchdringungsfläche werden durch einen einfachen optischen Abgleich ermöglichst.

FIG.1

EP 0 151 682 A2

# LEINE & KÖNIG

### PATENTANWÄLTE

Dipl.-Ing. Sigurd Leine · Dipl.-Phys. Dr. Norbert König

Burckhardtstraße 1
D-3000 Hannover 1

Telefon (05 11) 62 30 05

0151682

Messmetallurgie GmbH

Unser Zeichen
557/1-2 EPÜ-A

Datum
13.August 198·

Optische Einrichtung zur Erzeugung zweier sich unter
bestimmtem Winkel durchdringender koplanarer Strahlenbündel

Die Erfindung betrifft eine optische Einrichtung zur Erzeugung zweier sich unter bestimmtem Winkel durchdringender
koplanarer Strahlenbündel mit einem den einfallenden Strahl
in zwei Teilstrahlen aufspaltenden Strahlenteiler, der für
stabil bleibenden Winkel zwischen diesen Teilstrahlen sorgt.

Die US-PS 3 419 330 zeigt eine optische Einrichtung mit
einem Strahlenteiler, welcher einen einfallenden Lichtstrahl
in zwei koplanare Teilstrahlen aufspaltet, die mit Hilfe von
Spiegeln unter einem bestimmten Durchdringungswinkel wieder
zusammengeführt werden. Der Strahlenteiler ist ein Gitter,
das für stabil bleibenden Winkel zwischen den Teilstrahlen sorgt.
Diese bekannte optische Einrichtung ist sehr empfindlich gegenüber Winkelverlagerung der Spiegelflächen, da die Winkelfehler bei der Spiegeljustierung in der Strahlablenkung verdoppelt werden, so daß es sehr schwierig ist, den Durchdringungswinkel stabil einzujustieren.

Dr.K/N

-2-

Die Aufgabe der vorliegenden Erfindung besteht deshalb darin, eine optische Einrichtung gemäß Oberbegriff des Anspruchs 1 so auszubilden, daß der Durchdringungswinkel der Strahlungsbündel justierunempfindlich und stabil festlegbar ist.

Diese Aufgabe wird durch die im Kennzeichen des Anspruchs 1 angegebene Ausbildung gelöst.

Durch die erfindungsgemäße Ausbildung können der Geräteabstand vom optischen Bauelement bzw. Objekt und der Durchdringungswinkel unabhängig voneinander gewählt werden, wodurch die Anwendung der erfindungsgemäßen optischen Einrichtung wesentlich erleichtert wird. Der Strahldurchdringungswinkel ist leicht und stabil einstellbar. Variationen des Abstandes der Durchdringungsfläche werden durch einen einfachen optischen Abgleich ermöglicht.

Zweckmäßige und vorteilhafte Weiterbildungen der erfindungsgemäßen Aufgabenlösung sind in den Unteransprüchen gekennzeichnet.

Die Erfindung soll nun anhand der beigefügten Zeichnung, in der ein Ausführungsbeispiel schematisch dargestellt ist, näher erläutert werden.

Es zeigen

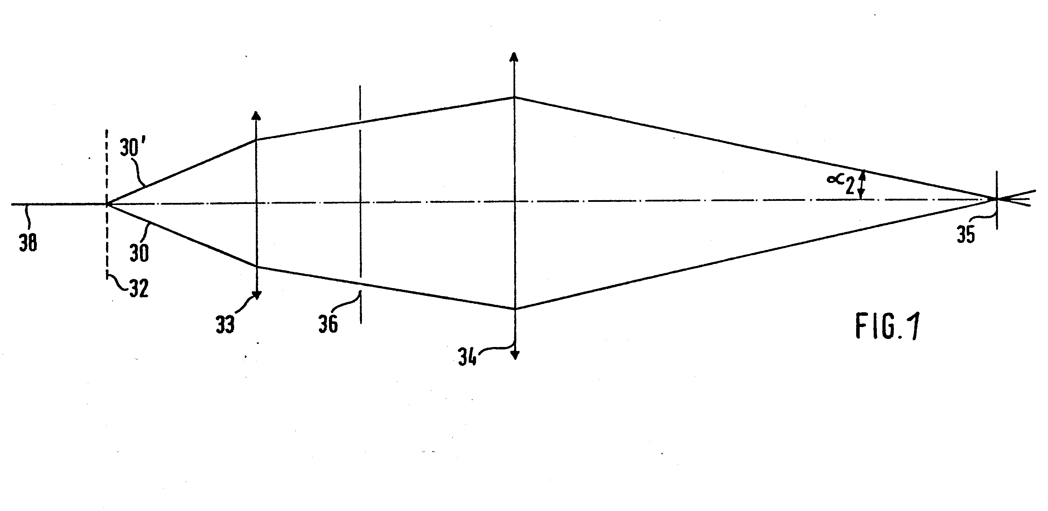

Fig. 1 schematisch eine Anordnung zur Erzeugung eines koplanaren Strahlenbündelpaares gemäß vorliegender Erfindung,

Fig. 2 eine grafische Darstellung zur Ableitung des Fehlers des Aufspaltwinkels d ($\alpha + \beta$) des Strahlenteilers (Gitters).

Zur Erzeugung zweier sich unter bestimmtem Winkel durchdringender koplanarer Strahlenbündel wird ein einfallendes paralleles Strahlenbündel 38 mit Hilfe eines Gitters 32 das aus Gründen des Wirkungsgrades bevorzugt ein $\lambda/2$-Laminarphasengitter ist, in zwei Teilstrahlen 30,30' aufgespalten. Jeder der beiden Teilstrahlen 30,30' fällt als Parallel-Lichtbündel in ein teleskopisches System 33,34. Die Teilstrahlen werden in diesem, wiederum als Parallel-Lichtbündel, in einen gewünschten Durchdringungsbereich 35 so umgelenkt, daß die Gitterebeneund der mittlere Durchdringungsbereich zueinander konjugiert sind. In der gemeinsamen Brennebene 36 der beiden optischen Baugruppen des teleskopischen Systems 33,34 wird eine Frequenzfilterung durchgeführt, so daß Streulicht und unerwünschte Beugungsordnungen des Gitters 32 unterdrückt werden. Zur Dimensionierung eines solchen Systemes lassen sich die folgenden mathematischen Beziehungen angeben.

$$\Gamma = \frac{f_2}{f_1} \tag{1}$$

$$\frac{\tan\alpha_2}{\tan\alpha_1} = \frac{f_1}{f_2} \tag{2}$$

$$b_2 = -\Gamma^2 g_1 + \Gamma (f_1 + f_2) \tag{3}$$

Mit $\Gamma$ Strahlaufweitungsfaktor

$f_1$ Brennweite der Baugruppe 33

$f_2$ Brennweite der Baugruppe 34

$\alpha_1$ Aufspaltwinkel zwischen 0. und 1. Ordnung des Gitters 32

$2\alpha_2$ Durchdringungswinkel im Durchdringungsbereich 35

$g_1$ Gegenstandsweite Gitter-Baugruppe 33

$b_2$ Bildweite Baugruppe 34, Durchdringungsbereich 35

Wie aus (2) ersichtlich, kann der Durchdringungswinkel $\alpha_2$ kontinuierlich eingestellt werden, wenn z,B, die Baugruppe 34 ein Varioobjekt ist. Der lineare Zusammenhang nach Gl. (3) zwischen der Gitterlage und der Lage des Durchdringungsbereichs ermöglicht eine einfache und leicht zu kalibrierende Entfernungseinstellung des Durchdringungsbereichs.

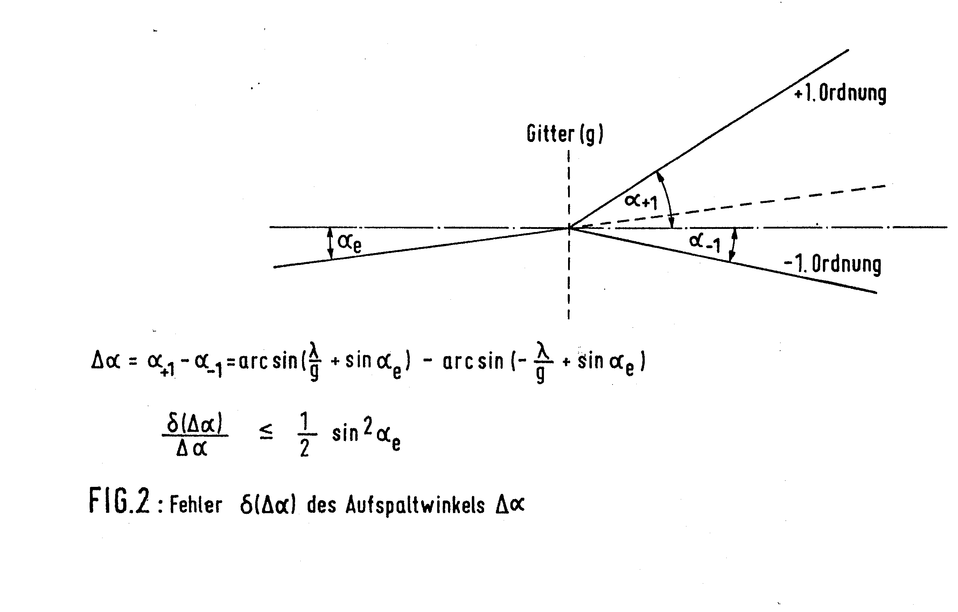

Der Fig. 2 und dort angegebenen Ableitung für den Fehler des Aufspaltungswinkels $\Delta\alpha$ ist entnehmbar, daß der Fehler nur in zweiter Ordnung vom Einfallswinkel $\alpha_e$ auf den Strahlenteiler (Gitter (g)) abhängt.

Dipl.-Ing. Sigurd Leine  Dipl.-Phys. Dr. Norbert König

Burckhardtstraße 1  Telefon (05 11) 62 30 05
D-3000 Hannover 1

Messmetallurgie GmbH

Unser Zeichen        Datum

557/1-2 EPÜ-A   13.August 1984

P a t e n t a n s p r ü c h e

1. Optische Einrichtung zur Erzeugung zweier sich unter bestimmtem Winkel durchdringender koplanarer Strahlenbündel, mit einem den einfallenden Strahl in zwei Teilstrahlen aufspaltenden Strahlenteiler, der für stabil bleibenden Winkel zwischen diesen Teilstrahlen sorgt, d a d u r c h g e k e n n z e i c h n e t , daß zur Zusammenführung der beiden Teilstrahlen (30,30') unter einem ebenfalls stabil bleibenden Winkel ein teleskopisch abbildendes System (33,34) dient.

2. Einrichtung nach Anspruch 1, d a d u r c h g e k e n n - z e i c h n e t , daß Ein- und Austrittsstrahlen des teleskopischen Systems je für sich parallele Strahlenbündel sind.

3. Einrichtung nach Anspruch 1 oder 2, d a d u r c h g e - k e n n z e i c h n e t , daß als Strahlenteiler (32) ein Wollastonprisma dient.

Dr.K/N

4. Einrichtung nach Anspruch 1, d a d u r c h g e - k e n n z e i c h n e t , daß der Strahlenteiler (32) ein Gitter ist.

5. Einrichtung nach Anspruch 1 oder 3, d a d u r c h g e k e n n z e i c h n e t , daß das strahlaufspaltende doppelbrechende optische Bauelement aus gegeneinander in feste Positionen justierbaren Teilen besteht, die unterschiedliche Lagen der optischen Achse aufweisen.

6. Einrichtung nach Anspruch 1 oder 4, d a d u r c h g e k e n n z e i c h n e t , daß gegeneinander in der Teilungsebene verdrehbare, unmittelbar hintereinander mit parallelen Teilungsflächen angeordnete Gitter vorgesehen sind, die für die Strahlteilung mit der resultierenden Moirégitterkonstanten wirksam werden.

7. Einrichtung nach Anspruch 1 oder 4, d a d u r c h g e k e n n z e i c h n e t , daß das Gitter zur Erzeugung von in mehreren Ebenen verlaufenden Strahlen ein Kreuzgitter ist.

8. Einrichtung nach Anspruch 1 oder 3, d a d u r c h g e - k e n n z e i c h n e t , daß zur Erzeugung von in zwei Ebenen verlaufenden Teilbündelpaaren zwei Kristallteilpaare mit unterschiedlicher Winkellage der optischen Achsen so hintereinander angeordnet sind, daß die virtuellen Strahl-

- 3 -

aufspaltungspunkte zusammenfallen, und daß zwischen den beiden Prismen jeder der ersten aufgespaltenen linear polarisierten Strahlen durch einen Phasenschieber in zirkular polarisiertes Licht verwandelt wird.

9. Einrichtung nach Anspruch 1, d a d u r c h  g e - k e n n z e i c h n e t , daß zumindest eine der beiden Baugruppen des teleskopischen Systems (33, 34) variable Brennweite besitzt.

10. Einrichtung nach Anspruch 1, 4, 6 und 7, d a d u r c h  g e k e n n z e i c h n e t , daß in einer geeigneten Ebene des teleskopischen Systems eine Ortsfrequenzfilterung (36) vorgenommen wird.

FIG.1

$$\Delta\alpha = \alpha_{+1} - \alpha_{-1} = \arcsin\left(\frac{\lambda}{g} + \sin\alpha_e\right) - \arcsin\left(-\frac{\lambda}{g} + \sin\alpha_e\right)$$

$$\frac{\delta(\Delta\alpha)}{\Delta\alpha} \leq \frac{1}{2}\sin^2\alpha_e$$

FIG.2 : Fehler $\delta(\Delta\alpha)$ des Aufspaltwinkels $\Delta\alpha$